# EUROPEAN PATENT SPECIFICATION

(11) **EP 2 461 010 B1**
(45) Date of publication and mention of the grant of the patent: **23.09.2015**
(21) Application number: 11191831.4
(22) Date of filing: 02.12.2011
(51) Int. Cl.: F02K 1/15, F04D 27/02, F04D 27/00

(54) **Active fan flutter control system and method**
Aktives Steuerungssystem und -verfahren für das Flattern eines Gebläses
Systeme et procédé de contrôle actif des tremblements de soufflante

(30) Priority: 03.12.2010 US 959802
(43) Date of publication of application: 06.06.2012
(73) Proprietor: Hamilton Sundstrand Corporation, Windsor Locks, CT 06096-1010 (US)
(72) Inventor: Rhoden, William E., Glastonbury, CT Connecticut 06033 (US)
(74) Representative: Taylor, Adam David

(56) References cited:
- EP-A1- 2 224 379
- EP-A2- 1 967 701
- WO-A1-2009/086349
- US-A- 5 005 353
- US-A1- 2003 077 163

## Description

### BACKGROUND OF THE INVENTION

The subject matter disclosed herein relates to turbine engines. More specifically, the subject disclosure relates to control of flutter of fan blades of turbine engines.

Turbine engines include a fan section having a number of airfoils, or fan blades, extending from a hub. In large turbine engines these fan blades can exceed five feet (1.5 metres) in length. The length and ratio of length to chord of fan blades leaves them susceptible to flow induced vibration, also known as flutter. Fan blade flutter can lead to structural damage to and failure of the fan blade, and liberation of the fan blade from the hub which results damage to components and potentially failure of the turbine engine. Fan blades typically are susceptible to flutter during certain operation conditions of the turbine engine. Typically, flutter is avoided by avoiding those operating conditions which may lead to flutter. This, however, places undesirable restrictions on the operation of the turbine engine.

EP 1967701 discloses a fan flutter control that controls air pressure to reduce flutter when a flutter condition is detected. The control uses a sensor to detect fan blade arrival times and compares these against an expected arrival time to determine whether a flutter condition exists.

### BRIEF DESCRIPTION OF THE INVENTION

According to one aspect of the invention, there is provided a flutter control system for a turbomachine fan comprising: a plurality of fan case sensors disposed at a fan case of the turbomachine and configured to sense passing of blade tips of a fan of the turbomachine; a controller operably connected to the plurality of fan case sensors; and a variable fan area nozzle actuator operably connected to the controller, such that the variable fan area nozzle actuator urges a change in fan nozzle area in response to data from the plurality of fan case sensors indicating flutter or near flutter conditions, characterised in that the plurality of fan case sensors is three fan case sensors.

According to another aspect of the invention, there is provided a method of flutter control for a turbomachine fan comprising: sensing a blade tip passing of a plurality of fan blades via a plurality of fan case sensors disposed at a fan case of a turbomachine; evaluating a twist of the plurality of fan blades via the plurality of fan case sensors; evaluating a flex of the plurality of fan blades via the plurality of fan case sensors; comparing data from the plurality of fan case sensors to a threshold; and changing a fan exit area based on the comparison to dampen flutter of the plurality of fan blades.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic of an exemplary embodiment of an active flutter control system; and
FIG. 2 is a schematic of another exemplary embodiment of an active flutter control system.

The detailed description explains embodiments of the invention, together with advantages and features, by way of example with reference to the drawings.

### DETAILED DESCRIPTION OF THE INVENTION

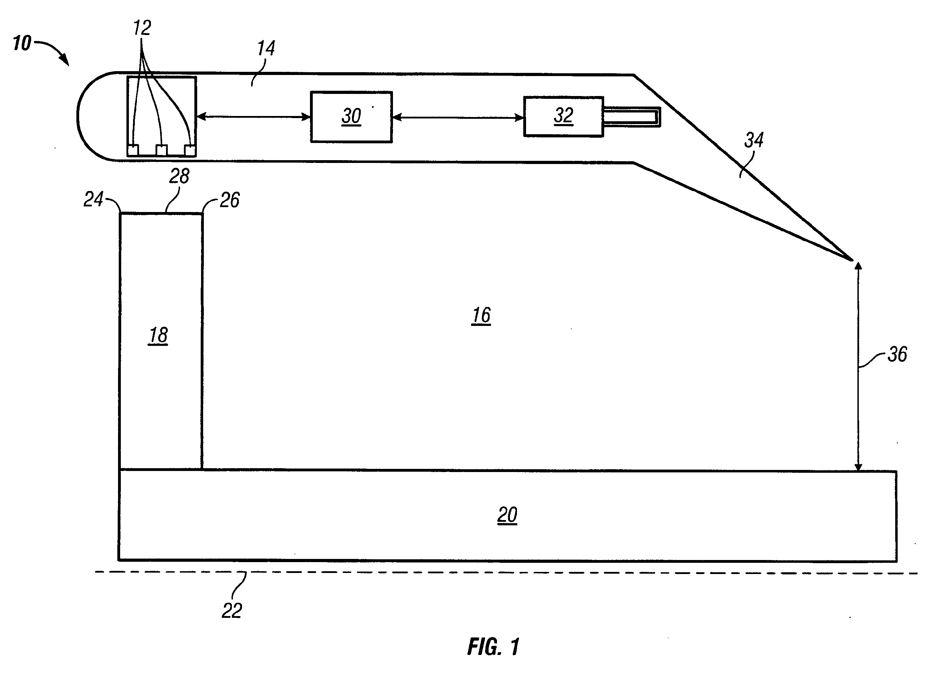

Shown in FIG. 1 is a schematic of an embodiment of an active flutter control system 10. The system includes a plurality of tip timing probes 12 located in a fan case 14 of a turbomachine 16. The tip timing probes 12 are located to observe arrival timing of a plurality of fan blades 18 fixed to a fan shaft 20 as the plurality of fan blades 18 rotate about a fan axis 22. In the embodiment of FIG. 1, three tip timing probes 12 are utilized, located in the fan case 14 substantially to monitor passing of a leading edge 24, trailing edge 26, and mid-chord 28 of the plurality of fan blades 18. The tip timing probes 12 monitoring the leading edge 24 and trailing edge 26 are utilized to determine fan blade twist. The tip timing probe 12 at mid-chord 28 monitors tip timing to determine flex of the fan blades 18. Even though three tip timing probes 12 are utilized in the embodiment of FIG. 1, it is to be appreciated that other quantities of tip timing probes 12, for example, five or six tip timing probes 12, may be used. Further, groups of tip timing probes 12 may be positioned radially around the fan case 14, for example at 12 o'clock, 4 o'clock, and 8 o'clock positions. This allows for collection of more tip passing data and correlation and/or verification of data when taken at multiple locations around the fan case 14.

Together, the information from the tip timing probes 12 is communicated to a full authority digital engine control (FADEC) 30. The FADEC 30 compares the passing timing of the fan blades 18 to a threshold, to determine if a fan blade 18 is approaching a flutter condition or is actively fluttering. Based on the comparison, the FADEC 30 sends commands to a variable fan area nozzle (VFAN) actuator 32. The VFAN actuator 32 drives a VFAN 34 to change a fan exit area 36. The change to fan exit area 36 ensures that sufficient back pressure is applied to the fan blades 18 to dampen out flutter as measured by the tip timing probes 12.

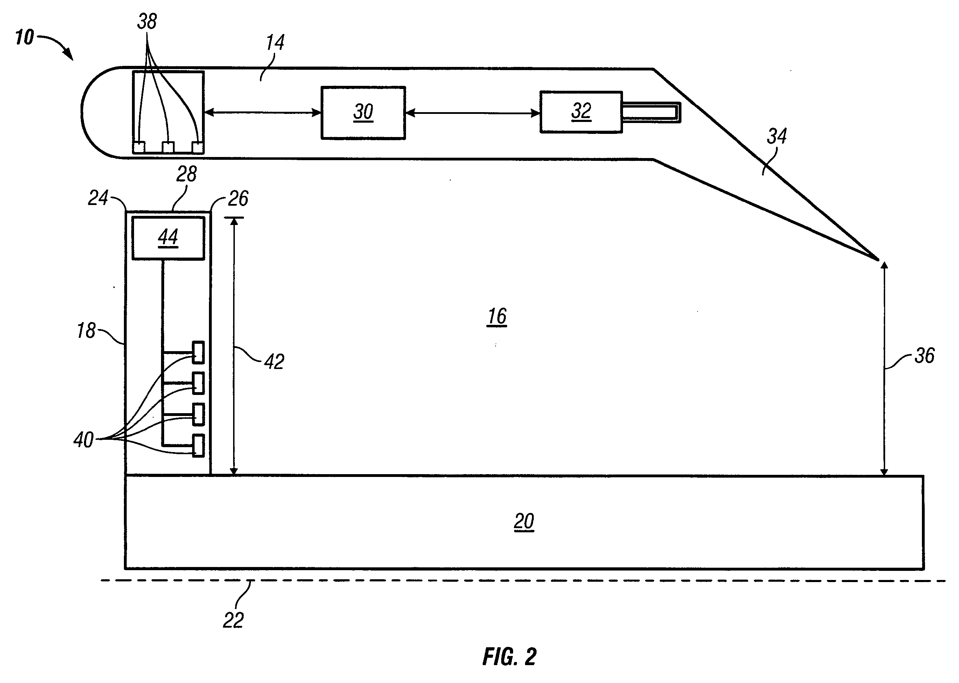

Another embodiment of a flutter control system 10 is shown in FIG. 2. In this embodiment, a plurality of radio frequency (RF) probes 38 located in the fan case 14 to observe arrival timing of the plurality of fan blades 18. As with the embodiment of FIG. 1, three RF probes 38 are utilized, located in the fan case 14 substantially to monitor passing of the leading edge 24, trailing edge 26, and mid-chord 28 of the plurality of fan blades 18. The RF probes 38 monitoring the leading edge 24 and trailing edge 26 are utilized to determine fan blade twist. The tip timing probe 12 at mid-chord 28 monitors tip timing to determine flex of the fan blades 18.

A plurality of strain gauges 40 are arranged along a span 42 of the fan blade 18 and are connected to a radio frequency identification (RFID) tag 44 at the fan blade 18. In FIG. 2, the strain gauges 40 are arranged substantially linearly along the span 42, but this arrangement is merely exemplary. Any appropriate arrangement of strain gauges 40, for example, placement of strain gauges 40 at known high stress points, is contemplated within the present scope. The RFID tag 44 communicates with one or more of the RF probes 38 to relay data from the plurality of strain gauges 40 to the FADEC 30. The FADEC 30 utilizes data from the plurality of strain gauges 40 and the RF probes 38 to determine flutter status of the fan blades 18. Utilizing the plurality of strain gauges 40 and the RFID tag 44 provides the FADEC 30 with more data to more accurately determine the flutter status of the plurality of fan blades 18. As in the embodiment of FIG. 1, the FADEC 30 is linked to the VFAN actuator 32 to change the fan exit area 36 to mitigate flutter of the plurality of fan blades 18.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention, which is defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A flutter control system (10) for a turbomachine fan comprising:
a plurality of fan case sensors (12;38) disposed at a fan case (14) of the turbomachine and configured to sense passing of blade tips of a fan of the turbomachine;
a controller (30) operably connected to the plurality of fan case sensors; and
a variable fan area nozzle actuator (32) operably connected to the controller, such that the variable fan area nozzle actuator urges a change in fan nozzle area (34) in response to data from the plurality of fan case sensors indicating flutter or near flutter conditions,
**characterised in that** the plurality of fan case sensors is three fan case sensors.

2. The system of claim 1, further comprising at least one blade sensor (40) disposed on a blade (18) of the fan.

3. The system of claim 2, wherein the at least one blade sensor is operably communicative with the controller.

4. The system of claim 3, further comprising a radio frequency identification tag (44) disposed at the blade and at least one radio frequency sensor (38) disposed at the fan case.

5. The system of claim 2, 3 or 4, wherein the at least one blade sensor is at least one strain gauge.

6. The system of any preceding claim, wherein the plurality of fan case sensors are a plurality of tip timing probes.

7. The system of any preceding claim, wherein the controller is a full authority digital engine control (FADEC).

8. A method of flutter control for a turbomachine fan comprising:
sensing a blade tip passing of a plurality of fan blades (18) via a plurality of fan case sensors (12;38) disposed at a fan case of a turbomachine;
evaluating a twist of the plurality of fan blades via the plurality of fan case sensors;
evaluating a flex of the plurality of fan blades via the plurality of fan case sensors;
comparing data from the plurality of fan case sensors to a threshold; and
changing a fan exit area based on the comparison to dampen flutter of the plurality of fan blades.

9. The method of claim 8, further comprising:
communicating the data from the plurality of fan case sensors to a controller (30);
comparing the data to a threshold at the controller; and
sending a command from the controller to a variable fan area nozzle actuator (32) to change the fan exit area.

10. The method of claim 9, further comprising:
collecting strain data via at least one fan blade sensor (40) disposed at the plurality of fan blades;
communicating the strain data to the controller; and
comparing the strain data to a strain threshold.

11. The method of claim 10, further comprising communicating the strain data to the controller via a radio frequency identification tag (44)

## Patentansprüche

1. Flattersteuersystem (10) für ein Turbomaschinengebläse, umfassend:
eine Mehrzahl von Gebläsekastensensoren (12; 38), die an einem Gebläsekasten (14) der Turbomaschine angeordnet ist und dazu konfiguriert ist, das Passieren von Schaufelspitzen eines Gebläses der Turbomaschine zu messen;
eine Steuereinrichtung (30), die mit der Mehrzahl von Gebläsekastensensoren in Wirkbeziehung verbunden ist; und
ein variables Gebläsedüsengrößenstellglied (32), das mit der Steuereinrichtung in Wirkbeziehung verbunden ist, derart, dass das variable Gebläsedüsengrößenstellglied eine Veränderung der Gebläsedüsengröße (34) in Reaktion auf Daten von der Mehrzahl von Gebläsekastensensoren bewirkt, die angeben, dass flatternde oder nahezu flatternde Bedingungen vorliegen,
**dadurch gekennzeichnet, dass** die Mehrzahl von Gebläsekastensensoren drei Gebläsekastensensoren beträgt.

2. System nach Anspruch 1, ferner umfassend wenigstens einen Schaufelsensor (40), der an einer Schaufel (18) des Gebläses angeordnet ist.

3. System nach Anspruch 2, wobei der wenigstens eine Schaufelsensor in Wirkbeziehung mit der Steuereinrichtung kommuniziert.

4. System nach Anspruch 3, ferner umfassend einen Funkfrequenzidentifikations-Tag (44), der an der Schaufel angeordnet ist, und wenigstens einen Funkfrequenzsensor (38), der am Gebläsekasten angeordnet ist.

5. System nach Anspruch 2, 3 oder 4, wobei der wenigstens eine Schaufelsensor wenigstens ein Dehnungsmesser ist.

6. System nach einem der vorangehenden Ansprüche, wobei die Mehrzahl von Gebläsekastensensoren eine Mehrzahl von Spitzentaktungssonden ist.

7. System nach einem der vorangehenden Ansprüche, wobei die Steuereinrichtung eine digitale Motorsteuerung mit voller Berechtigung (full authority digital engine control, FADEC) ist.

8. Verfahren zur Flattersteuerung für ein Turbomaschinengebläse, umfassend:
Messen des Passierens einer Schaufelspitze von einer Mehrzahl von Gebläseschaufeln (18) über eine Mehrzahl von Gebläsekastensensoren (12; 38), die an einem Gebläsekasten einer Turbomaschine angeordnet ist;
Beurteilen einer Verdrehung der Mehrzahl von Gebläseschaufeln über die Mehrzahl von Gebläsekastensensoren;
Beurteilen einer Biegung der Mehrzahl von Gebläseschaufeln über die Mehrzahl von Gebläsekastensensoren;
Vergleichen von Daten der Mehrzahl von Gebläsekastensensoren mit einem Schwellenwert; und
Ändern der Gebläseaustrittsgröße auf Grundlage des Vergleichs, um Flattern der Mehrzahl von Gebläseschaufeln zu dämpfen.

9. Verfahren nach Anspruch 8, ferner umfassend:
Übermitteln der Daten von der Mehrzahl von Gebläsekastensensoren an eine Steuereinrichtung (30);
Vergleichen der Daten mit einem Schwellenwert an der Steuereinrichtung; und
Senden eines Befehls von der Steuereinrichtung an ein variables Gebläsedüsengrößenstellglied (32), um die Gebläseaustrittsgröße zu ändern.

10. Verfahren nach Anspruch 9, ferner umfassend:
Sammeln von Dehnungsdaten über wenigstens einen Gebläseschaufelsensor (40), der an der Mehrzahl von Gebläseschaufeln angeordnet ist;
Übermitteln der Dehnungsdaten an die Steuereinrichtung; und
Vergleichen der Dehnungsdaten mit einem Dehnungsschwellenwert.

11. Verfahren nach Anspruch 10, ferner umfassend Übermitteln der Dehnungsdaten über einen Funkfrequenzidentifikations-Tag (44) an die Steuereinrichtung.

## Revendications

1. Système de contrôle du flottement (10) pour un ventilateur de turbomachine comprenant :
une pluralité de capteurs de carter de ventilateur (12 ; 38) agencés sur un carter de ventilateur (14) de la turbomachine et configurés pour détecter le passage d'extrémités de pales d'un ventilateur de la turbomachine ;
un contrôleur (30) relié en fonctionnement à la pluralité de capteurs de carter de ventilateur ; et
un actionneur de buse de ventilation à zone variable (32) relié en fonctionnement au contrôleur de sorte que l'actionneur de buse de ventilation à zone variable provoque un changement de zone de buse de ventilation (34) en réponse aux données de la pluralité de capteurs de carter de ventilateur indiquant des conditions de flottement ou presque de flottement,
**caractérisé en ce que** la pluralité de capteurs de carter de ventilateur est constituée de trois capteurs de carter de ventilateur.

2. Système selon la revendication 1, comprenant en outre au moins un capteur de pale (40) agencée sur une pale (18) du ventilateur.

3. Système selon la revendication 2, dans lequel l'au moins un capteur de pale communique en fonctionnement avec le contrôleur.

4. Système selon la revendication 3, comprenant en outre une étiquette d'identification de radiofréquence (44) agencée sur la pale et au moins un capteur de radiofréquence (38) agencé sur le carter de ventilateur.

5. Système selon la revendication 2, 3 ou 4, dans lequel l'au moins un capteur de lame est au moins une jauge de contrainte.

6. Système selon l'une quelconque des revendications précédentes, dans lequel la pluralité de capteurs de carter de ventilateur est une pluralité de sondes de synchronisation des extrémités.

7. Système selon l'une quelconque des revendications précédentes, dans lequel le contrôleur est un contrôle de moteur numérique à pleine autorité (FADEC).

8. Procédé de contrôle du flottement pour un ventilateur de turbomachine comprenant :
la détection d'une extrémité de pale passant d'une pluralité de pales de ventilateur (18) via une pluralité de capteur de carter de ventilateur (12 ; 38) agencés sur un carter de ventilateur d'une turbomachine ;
l'évaluation d'une torsion de la pluralité de pales de ventilateur via la pluralité de capteurs de carter de ventilateur ;
l'évaluation d'une flexion de la pluralité de pales de ventilateur via la pluralité de capteurs de carter de ventilateur ;
la comparaison de données de la pluralité de capteurs de carter de ventilateur avec un seuil ; et
le changement d'une zone de sortie de ventilateur basé sur la comparaison pour amortir le flottement de la pluralité de pales de ventilateur.

9. Procédé selon la revendication 8, comprenant en outre :
la communication des données de la pluralité de capteurs de carter de ventilateur à un contrôleur (30) ;
la comparaison des données avec un seuil au niveau du contrôleur ; et
l'envoi d'une commande du contrôleur à un actionneur de buse de ventilation à zone variable (32) pour changer la zone de sortie de ventilateur.

10. Procédé selon la revendication 9, comprenant en outre :
la collecte de données de contrainte via au moins un capteur de lame de ventilateur (40) agencé sur la pluralité de pales de ventilateur ;
la communication des données de contrainte au contrôleur ; et
la comparaison des données de contrainte avec un seuil de contrainte.

11. Procédé selon la revendication 10, comprenant en outre la communication des données de contrainte au contrôleur via une étiquette d'identification de radiofréquence (44).
